# EUROPÄISCHE PATENTANMELDUNG

(11) **EP 4 844 961 A1**
(43) Veröffentlichungstag der Anmeldung: **25.11.2026**
(21) Anmeldenummer: 26158999.8
(22) Anmeldetag: 17.02.2026
(51) Int. Cl.: H01R 13/66

(54) **STECKDOSE UND ANORDNUNG MIT EINER SOLCHEN UND EINER SCHALTBAREN STECKDOSE**

(30) Priorität: 22.05.2025 DE 102025119909
(71) Anmelder: Albrecht Jung GmbH & Co. KG, 58579 Schalksmühle (DE)
(72) Erfinder: Rauch, Daniel, 42115 Wuppertal (DE); Kniep, Sascha, 58762 Altena (DE); Schulte, Manuel, 42855 Remscheid (DE)
(74) Vertreter: Fobbe, Tobias

(57) **Zusammenfassung**

Vorgestellt wird eine Steckdose S umfassend Anschlussmittel an eine Energieversorgung, wobei die Steckdose S eine Zentralplatte Z und einen Designrahmen D umfasst.

Besonders dabei ist, dass die Steckdose S an ein Smart Meter oder ein Energiemanagementsystem zur Bereitstellung von Informationen bezüglich regenerativ erzeugter Energie angeschlossen ist und dass die Steckdose S in der Zentralplatte Z eine visuelle Anzeige A umfasst, die die Informationen bezüglich regenerativ erzeugter Energie oder Informationen bezüglich einer aktuellen Stromquelle, beispielsweise regenerativ erzeugter Energie oder Netzstrombezug inklusive des Netzstrompreises, visuell wiedergibt.

## Beschreibung

Die Erfindung betrifft eine Steckdose umfassend Anschlussmittel an eine Energieversorgung und eine Zentralplatte sowie einen Designrahmen.

Ferner betrifft die Erfindung eine Anordnung mit einer solchen Steckdose und einer schaltbaren Steckdose.

Die umweltbewusste Nutzung von elektrischen Verbrauchern angeschlossen an Steckdosen gewinnt zunehmen an Bedeutung, insbesondere wenn ein Gebäude regenerativ Energie erzeugt.

Sogenannte Funktionsmodule zur Installation in der Installationsdose hinter elektrische/elektronische Installationsgeräte der Gebäudeinstallationstechnik (siehe DE 10 2021 132 395 A1 oder DE 10 2024 126 894 B3) erlauben es, bestimmte Funktionalitäten, beispielsweise das Verknüpfen mit einem Smart-Home-Netzwerk zur Erfassung regenerativ erzeugter Energie und zur entsprechenden Steuerung der Verbraucher mit schaltbaren Steckdosen, hinzuzugewinnen. Problematisch dabei ist, dass die Erfassung für den Anwender, wieviel regenerative Energie im Gebäude vorhanden ist, regelmäßig ein Endgerät erfordert, was den Ableseaufwand erhöht beziehungsweise das Ablesen unkomfortabel macht.

Ausgehend von diesem diskutierten Stand der Technik liegt der Erfindung die Aufgabe zugrunde, ein Installationsgerät der Gebäudeinstallationstechnik bereitzustellen, das es ohne die Einbindung eines Endgerätes wie ein Smartphone oder ein Tablet ermöglicht, einen umweltbewussten und preisbewussten Energieverbrauch zu fördern und dabei besonders komfortabel ablesbar ist.

Gelöst wird diese Aufgabe durch eine Steckdose der Gebäudeinstallationstechnik, wobei die Steckdose an ein Smart Meter oder ein Energiemanagementsystem zur Bereitstellung von Informationen bezüglich regenerativ erzeugter Energie angeschlossen ist und dass die Steckdose in der Zentralplatte eine visuelle Anzeige umfasst, die die Informationen bezüglich regenerativ erzeugter Energie oder Informationen bezüglich einer aktuellen Stromquelle, beispielsweise regenerativ erzeugter Energie oder Netzstrombezug inklusive des Netzstrompreises, visuell wiedergibt.

Durch die erfindungsgemäße Steckdose wird somit erreicht, dass Personen im Gebäude unmittelbar, intuitiv und einfach bezüglich der regenerativ erzeugten Energie informiert werden, ohne auf externe Geräte wie Apps oder Displays angewiesen zu sein.

Die erfindungsgemäße Steckdose der Gebäudeinstallationstechnik weist Anschlussmittel an eine Energieversorgung sowie Anschlussmittel an eine Heizungsanlage eines Gebäudes auf, wobei die Steckdose ein Bedienelement umfasst. Die Steckdose ist an ein Smart Meter oder ein Energiemanagementsystem zur Bereitstellung von Informationen bezüglich regenerativ erzeugter Energie oder Informationen bezüglich einer aktuellen Stromquelle, beispielsweise regenerativ erzeugter Energie oder Netzstrombezug inklusive des Netzstrompreises, angeschlossen (beispielsweise drahtlos oder drahtgebunden). Die Steckdose umfasst eine visuelle Anzeige, die die Informationen bezüglich regenerativ erzeugter Energie visuell wiedergibt. Durch eine solche erfindungsgemäße Steckdose wird es auf geschickte und komfortable Weise ermöglicht, nicht nur einen Überschuss an regenerativ erzeugter Energie zu erfassen, sondern auch die Erfassung des aktuellen Energiepreises, insbesondere des Strompreises des externen Netzstroms, möglich zu machen. Damit kann ein Anwender einen für ihn günstigen Zeitpunkt des Energieverbrauchs - sei es durch elektrische Verbraucher oder der (elektrischen) Heizungsanlage - abpassen.

Ein Smart Meter ist ein intelligentes Messsystem, das den Stromverbrauch zeitaufgelöst erfasst und digital überträgt. Es bildet die technische Grundlage für dynamische Stromtarife, bei denen sich der Preis stündlich nach Marktbedingungen richtet. Verbraucher können ihren Energieeinsatz damit flexibel auf günstige Tarifzeiten abstimmen.

In Verbindung mit einer Photovoltaikanlage und ggf. einem Stromspeicher ermöglicht das Smart Meter eine gezielte Nutzung des selbst erzeugten Stroms und eine optimierte Steuerung elektrischer Verbraucher. Dadurch wird der Eigenverbrauchsanteil gesteigert und gleichzeitig das öffentliche Stromnetz entlastet.

Zudem liefern Smart Meter die nötige Datengrundlage für ein netzdienliches Lastmanagement: Verbrauch kann automatisch verschoben werden, um Lastspitzen zu vermeiden und die Integration erneuerbarer Energien zu unterstützen. Damit sind Smart Meter ein zentraler Baustein für ein flexibles, stabiles und zukunftsfähiges Energiesystem.

Gemäß einer außerordentlich bevorzugten Weiterbildung der erfindungsgemäßen Steckdose umfasst die visuelle Anzeige eine numerische Anzeige und/oder eine farbkodierte Anzeige. Während die numerische Anzeige eine präzise Auskunft über die Leistungsaufnahme ermöglicht, ist eine Darstellung via farbkodierte Anzeige besonders intuitiv. Besonders bevorzugt, umfasst die Erfindung sowohl eine numerische als auch eine farbkodierte Anzeige, um beide Vorteile gleichzeitig zu verwirklichen. Dieses kann beispielsweise erreicht werden, indem ein geringer Überschuss an regenerativ erzeugter Energie von beispielsweise 500W numerisch in orange via Display angezeigt wird, während ein Überschuss an regenerativ erzeugter Energie von beispielsweise 1500W numerisch in grün via Display angezeigt wird. Dabei kann die Anzeige zusätzlich durch Blinken hinterlegt sein, insbesondere dann, wenn eine Schwelle des Überschusses an regenerativ erzeugter Energie unterschritten wird. So kann der Nutzer vor einer etwaigen Überlastung der Steckdose beziehungsweise auf etwaige Sicherheitsrisiken präventiv aufmerksam gemacht werden.

In einer Weiterbildung der erfindungsgemäßen Steckdose weist die visuelle Anzeige eine, einen Balken aufweisende, Balkenanzeige auf, wobei der Balken Teilungseinheiten aufweist, die kontinuierlich oder diskretisiert ausgeführt sind. Dabei führt die visuelle Anzeige bevorzugt eine Kreisbahn nach, wobei im Inneren der Kreisbahn die Anschlussmittel für den Verbraucher angeordnet sind. Dieses erlaubt vorteilhafterweise eine längere Anzeige für die Balkenanzeige, die mit einer Erhöhung des durch den Betrachter wahrnehmbaren Auflösungsvermögens einhergeht.

In einer Weiterbildung der erfindungsgemäßen Steckdose ist diese in einer Höhe von 0,9 m bis 1,4 m über dem Fußboden installiert, so dass die Ablesbarkeit besonders komfortabel ist.

In einer Weiterbildung der erfindungsgemäßen Steckdose erfolgt durch ein Smart Meter oder ein Energiemanagementsystem eine automatische Umstellung von Netzstrom auf Solarstrom und umgekehrt, abhängig von vorher definierten Schwellwerten, wobei die erfindungsgemäße Steckdose selbst die Eingabe von Schwellwerten/Energiepreisen ermöglicht oder die Eingabe via Endgerät, das mit der Steckdose gekoppelt ist, ermöglicht wird, so dass eine intuitive Interaktion mit der Steckdose anstelle einer komplizierten Interaktion mit dem Smart Meter oder ein Energiemanagementsystem für den Anwender entbehrlich wird.

Die Erfindung ist zudem auf eine Anordnung umfassend eine schaltbare Steckdose und eine erfindungsgemäße Steckdose gerichtet, wobei die Steckdose durch die erfindungsgemäße Steckdose in Abhängigkeit von den Informationen bezüglich regenerativ erzeugter Energie und/oder des Energiepreises geschaltet wird. Damit wird der Nutzen der erfindungsgemäßen Steckdose auf weitere an elektrische Steckdosen anschließbare Verbraucher erweitert.

Nachfolgend ist die Erfindung unter Bezugnahme auf die beigefügten Figuren anhand diverser Ausführungsbeispiele beschrieben. Es zeigen:
- **Fig. 1**:: eine schematische Darstellung einer erfindungsgemäßen Steckdose in einer perspektivischen Vorderansicht,
- **Fig. 2**:: eine schematische Darstellung einer weiteren erfindungsgemäßen Steckdose in einer perspektivischen Vorderansicht, und
- **Fig. 3:**: eine schematische Darstellung einer weiteren erfindungsgemäßen Steckdose in einer perspektivischen Vorderansicht.

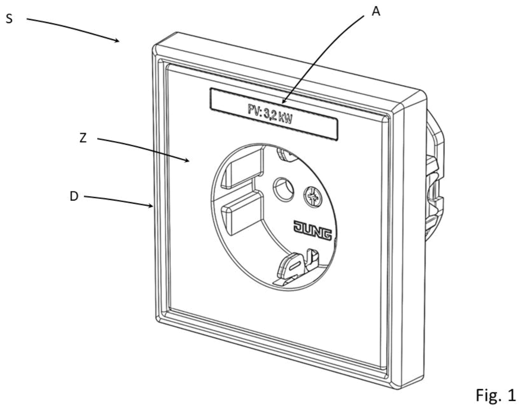

Figur 1 zeigt die schematische Darstellung einer erfindungsgemäßen Steckdose S in einer perspektivischen Vorderansicht. Die erfindungsgemäße Steckdose S weist Anschlussmittel an eine Energieversorgung auf (der Einfachheit halber nicht dargestellt), wobei die Steckdose S eine Zentralplatte Z und ein Designrahmen D umfasst. Die Steckdose S ist an ein Smart Meter oder ein

Energiemanagementsystem zur Bereitstellung von Informationen bezüglich regenerativ erzeugter Energie oder Informationen bezüglich einer aktuellen Stromquelle, beispielsweise regenerativ erzeugter Energie oder Netzstrombezug inklusive des Netzstrompreises angeschlossen (beispielsweise drahtlos oder drahtgebunden). Die Steckdose S umfasst eine visuelle Anzeige A, die die Informationen bezüglich regenerativ erzeugter Energie visuell numerisch wiedergibt, vorliegend in Gestalt der aktuell durch eine PV-Anlage als Überschuss in einem Gebäude erzeugte Leistung (3,2 kW).

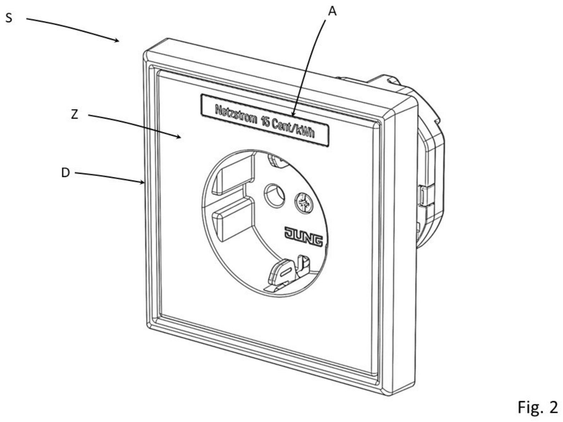

Figur 2 zeigt die schematische Darstellung einer weiteren erfindungsgemäßen Steckdose S in einer perspektivischen Vorderansicht. Dabei umfasst die visuelle Anzeige A eine numerische Anzeige. Diese gibt Informationen bezüglich des Energiepreises des externen Netzstroms (vorliegend 15 Cent pro kWh) wieder, die durch ein Smart Meter oder ein Energiemanagementsystem bereitgestellt werden.

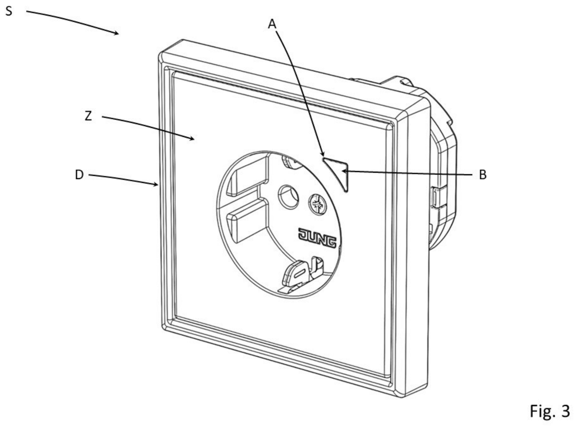

Figur 3 zeigt eine schematische Darstellung einer weiteren erfindungsgemäßen Steckdose S in einer perspektivischen Vorderansicht. Die visuelle Anzeige A umfasst eine farbkodierte Anzeige. Dabei wird ein geringer Überschuss an regenerativ erzeugter Energie von beispielsweise 500W in orange via LED-Anzeige angezeigt, während ein Überschuss an regenerativ erzeugter Energie von beispielsweise 1500W numerisch in grün via LED-Anzeige angezeigt wird. Gleichzeitig ist die Anzeige A auch als Betätigungselement B ausgeführt, so dass durch Drücken des Betätigungselementes B (vorzugsweise bei Überschuss an regenerativ erzeugter Energie oder einem günstigen Netzstrompreis, der ebenfalls farbkodiert angezeigt werden kann) die erfindungsgemäße Steckdose S oder eine mit der erfindungsgemäßen Steckdose S verknüpfte weitere schaltbare Steckdose eingeschaltet wird. Damit wird auf wirksame und einfache Art und Weise ein Beitrag zum Umweltschutz und zur kosteneffizienten Nutzung von elektrischen Verbrauchern realisiert.

### Bezugszeichenliste

- A: Anzeige
- B: Betätigungselement
- D: Designrahmen
- S: Steckdose
- Z: Zentralplatte

## Patentansprüche

1. Steckdose (S) umfassend Anschlussmittel an eine Energieversorgung, wobei die Steckdose (S) eine Zentralplatte (Z) und einen Designrahmen (D) umfasst, **dadurch gekennzeichnet, dass** die Steckdose (S) an ein Smart Meter oder ein Energiemanagementsystem zur Bereitstellung von Informationen bezüglich regenerativ erzeugter Energie angeschlossen ist und dass die Steckdose (S) in der Zentralplatte (Z) eine visuelle Anzeige (A) umfasst, die die Informationen bezüglich regenerativ erzeugter Energie oder Informationen bezüglich einer aktuellen Stromquelle, beispielsweise regenerativ erzeugter Energie oder Netzstrombezug inklusive des Netzstrompreises, visuell wiedergibt.

2. Steckdose (S) nach Anspruch 1, **dadurch gekennzeichnet, dass** die visuelle Anzeige (A) eine numerische Anzeige umfasst.

3. Steckdose (S) nach Anspruch 1 oder 2, **dadurch gekennzeichnet, dass** die visuelle Anzeige (A) eine farbkodierte Anzeige umfasst.

4. Steckdose (S) nach einem der Ansprüche 1 bis 3, **dadurch gekennzeichnet, dass** die visuelle Anzeige (A) eine, einen Balken aufweisende, Balkenanzeige umfasst, wobei der Balken Teilungseinheiten aufweist, die kontinuierlich oder diskretisiert ausgeführt sind.

5. Steckdose (S) nach Anspruch 4, **dadurch gekennzeichnet, dass** die visuelle Anzeige (A) eine Kreisbahn nachführt, wobei im Inneren der Kreisbahn Anschlussmittel für einen Verbraucher angeordnet sind.

6. Steckdose (S) nach einem der Ansprüche 1 bis 5, **dadurch gekennzeichnet, dass** die Steckdose (S) in einer Höhe von 0,9 m bis 1,4 m über dem Fußboden installiert ist.

7. Anordnung umfassend eine schaltbare Steckdose und eine Steckdose (S) nach einem der Ansprüche 1 bis 6, wobei die schaltbare Steckdose durch die Steckdose (S) in Abhängigkeit von den Informationen bezüglich regenerativ erzeugter Energie und/oder des Energiepreises geschaltet wird.
